(19) Europäisches Patentamt / European Patent Office / Office européen des brevets

(11) **EP 3 978 980 A1**

(12) **EUROPEAN PATENT APPLICATION**
published in accordance with Art. 153(4) EPC

(43) Date of publication:
**06.04.2022  Bulletin 2022/14**

(21) Application number: **20832711.4**

(22) Date of filing: **18.06.2020**

(51) Int Cl.:
**G02B 15/04** (2006.01)  **G02B 13/18** (2006.01)
**G02B 3/14** (2006.01)

(86) International application number:
**PCT/CN2020/096845**

(87) International publication number:
**WO 2020/259386 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2019  CN 201910574067**

(71) Applicant: **GUANGDONG OPPO MOBILE
TELECOMMUNICATIONS
CORP., LTD.
Wusha, Chang'an
Dongguan
Guangdong 523860 (CN)**

(72) Inventor: **YANG, Xin
Dongguan, Guangdong 523860 (CN)**

(74) Representative: **Taor, Simon Edward William et al
Venner Shipley LLP
200 Aldersgate
London EC1A 4HD (GB)**

(54) **ZOOM LENS, ZOOM METHOD, TERMINAL, AND COMPUTER-READABLE STORAGE MEDIUM**

(57)    Provided are a zoom lens (1), a zoom method, a terminal, and a computer-readable storage medium. The zoom lens (1) includes: n lenses (10) arranged sequentially along a direction of an optical axis, n being a positive integer greater than or equal to 2; a diaphragm (11) arranged parallel to the n lenses (10) along the direction of the optical axis; and an imaging surface (12) arranged at an end of the optical axis and parallel to the n lenses (10). The n lenses (10) include m variable curvature lenses and n-m aspheric lenses (101), driving devices are provided at a top end and a bottom end of each of the m variable curvature lenses, and m is a positive integer greater than 1 and smaller than n. An incident angle is obtained by changing power of the driving devices corresponding to each of the m variable curvature lenses and changing a radius of curvature of the m variable curvature lenses. When incident light corresponding to an object is received, the incident light is capable of passing through the n lenses (10) under a light-confining effect of the diaphragm (11) and being reflected to the imaging surface (12) at the incident angle for imaging.

FIG. 1

**Description**

The present application is based on and claims the priority to the Chinese Patent Application No. 201910574067.9, titled "ZOOM LENS, ZOOM METHOD, TERMINAL, AND COMPUTER-READABLE STORAGE MEDIUM", and filed on June 28, 2019, the entire content of which is hereby incorporated by reference.

**FIELD**

Embodiments of the present disclosure relate to optical zoom technologies in the field of electronic applications, and more particularly, to a zoom lens, a zoom method, a terminal, and a computer-readable storage medium.

**BACKGROUND**

A zoom lens refers to a lens having a variable focal length within a certain range to obtain different fields of view, images of different sizes, and different scenery ranges. That is, the zoom lens can change a shooting range by changing the focal length, without changing a shooting distance. Therefore, one zoom lens can achieve functions of several prime lenses, which is very conducive to picture composition. The zoom lens can be applied to a terminal to realize a shooting function.

At present, when the zoom lens on the terminal is used to perform zooming, the zooming is achieved by changing the focal length by means of changing, through motor control, an arrangement distance of lenses in the zoom lens. However, such a method requires a moving distance reserved for the lenses, and thus the size of the zoom lens may be relatively large and an overall optical path may be very long. Also, since the motor inevitably generates errors such as eccentricity and tilt during the movement, an imaging quality of the lens is lowered.

SUMMARY

Embodiments of the present disclosure provide a zoom lens, a zoom method, a terminal, and a computer-readable storage medium, capable of reducing a size of the zoom lens, and improving an imaging quality and performance of the zoom lens.

Technical solutions of the embodiments of the present disclosure are implemented as follows.

An embodiment of the present disclosure provides a zoom lens. The zoom lens includes: n lenses arranged sequentially along a direction of an optical axis, n being a positive integer greater than or equal to 2; a diaphragm arranged parallel to the n lenses along the direction of the optical axis; and an imaging surface arranged at an end of the optical axis and parallel to the n lenses. The n lenses comprise m variable curvature lenses and n-m aspheric lenses, and driving devices are provided at a top end and a bottom end of each of the m variable curvature lenses, m being a positive integer greater than 1 and smaller than n. A radius of curvature of at least one variable curvature lens of the m variable curvature lenses is changed by changing power of the driving devices corresponding to the at least one variable curvature lens to obtain an incident angle. When incident light corresponding to an object is received, the incident light is capable of passing through the n lenses under a light-confining effect of the diaphragm and being reflected to the imaging surface at the incident angle for imaging.

In the above zoom lens, the diaphragm is arranged at a position between any two of the n lenses along the direction of the optical axis, and the diaphragm is configured to confine incident reflected light and emit the confined light.

In the above zoom lens, the m variable curvature lenses and the n-m aspheric lenses are alternately arranged along the direction of the optical axis.

In the above zoom lens, the m variable curvature lenses are consecutively arranged between any two of the n-m aspheric lenses along the direction of the optical axis.

In the above zoom lens, the imaging surface is a light-receiving surface provided with a Charge-coupled Device (CCD) or a Complementary Metal Oxide Semiconductor (CMOS).

In the above zoom lens, each of the driving devices is an electrode, and the power of each of the driving devices is a voltage of the electrode.

In the above zoom lens, the zoom lens further includes a connecting piece configured to connect the n lenses, the diaphragm, and the imaging surface.

An embodiment of the present disclosure provides a zoom method. The zoom method is applied in a terminal provided with the zoom lens. The zoom method includes: receiving a zoom instruction; obtaining at least one current power value by changing power of at least one of the driving devices in response to the zoom instruction; obtaining at least one radius of curvature corresponding to at least one variable curvature lens of the m variable curvature lenses based on the at least one current power value; obtaining a zoom focal length based on the at least one radius of curvature; and shooting the object by using the zoom focal length.

In the above solution, said obtaining the zoom focal length based on the at least one radius of curvature includes: obtaining at least one lens thickness and at least one refractive index corresponding to the at least one variable curvature lens; calculating at least one lens focal length corresponding to the at least one variable curvature lens based on the at least one radius of curvature, the at least one lens thickness, and the at least one refractive index; and obtaining the zoom focal length based on a combination of changes of the at least one lens focal length.

An embodiment of the present disclosure provides a terminal. The terminal includes: a receiving part configured to receive a zoom instruction; an obtaining part configured to obtain at least one current power value by changing power of at least one driving device in response to the zoom instruction, obtain at least one radius of curvature corresponding to at least one variable curvature lens based on the at least one current power value, and obtain a zoom focal length based on the at least one radius of curvature; and a shooting part configured to shoot an object by using the zoom focal length.

In the above terminal, the obtaining part is further configured to obtain at least one lens thickness and at least one refractive index corresponding to the at least one variable curvature lens, calculate at least one lens focal length corresponding to the at least one variable curvature lens based on the at least one radius of curvature, the at least one lens thickness, and the at least one refractive index, and obtain the zoom focal length based on a combination of changes of the at least one lens focal length.

An embodiment of the present disclosure further provides a terminal. The terminal includes: a body; a housing surrounding the body; a zoom lens arranged on a back of the body and protruding from the housing, where the zoom lens is electrically connected to the controller; a memory provided in the body and configured to store executable instructions; and a controller provided in the body and configured to implement, when executing the executable instructions stored in the memory, the zoom method according to the embodiments of the present disclosure.

In the above terminal, the controller is further configured to change the power of at least one of the driving devices in the zoom lens in response to the zoom instruction.

An embodiment of the present disclosure provides a computer-readable storage medium. The computer-readable storage medium stores executable instructions. The executable instructions, when executed by a controller, implement the zoom method according to the embodiments of the present disclosure.

Embodiments of the present disclosure provide a zoom lens, a zoom method, a terminal, and a computer-readable storage medium. The variable curvature lenses are provided in the zoom lens, and each variable curvature lens is provided with driving devices. In this way, the curvature of the variable curvature lens can be changed by changing the power of the driving devices, and accordingly, the focal length of the variable curvature lens can be changed, thereby affecting a focal length of the whole zoom lens and exerting the zoom function. Since the zoom lens can exert the zoom function only through the provided driving devices, the arrangement positions of the n lenses along the direction of the optical axis can remain unchanged, and a length occupied by the arrangement positions of the lenses is smaller than a distance required for moving the lenses. Therefore, such a zoom lens has a small size, a short optical path, and good imaging performance, and it avoids the errors such as eccentricity and tilt that are caused by lens movement, thereby improving the imaging quality of the lens.

## BRIEF DESCRIPTION OF DRAWINGS

FIG. 1 is a structural schematic diagram of a zoom lens according to an embodiment of the present disclosure.

FIG. 2A is a first schematic diagram illustrating an exemplary arrangement of diaphragms according to an embodiment of the present disclosure.

FIG. 2B is a second schematic diagram illustrating an exemplary arrangement of diaphragms according to an embodiment of the present disclosure.

FIG. 2C is a third schematic diagram illustrating an exemplary arrangement of diaphragms according to an embodiment of the present disclosure.

FIG. 3 is a first schematic diagram illustrating an exemplary arrangement of lenses according to an embodiment of the present disclosure.

FIG. 4 is a second schematic diagram illustrating an exemplary arrangement of lenses according to an embodiment of the present disclosure.

FIG. 5A is a third schematic diagram illustrating an exemplary arrangement of lenses according to an embodiment of the present disclosure.

FIG. 5B is a fourth schematic diagram illustrating an exemplary arrangement of lenses according to an embodiment of the present disclosure.

FIG. 6 is a fifth schematic diagram illustrating an exemplary arrangement of lenses according to an embodiment of the present disclosure.

FIG. 7 is a sixth schematic diagram illustrating an exemplary arrangement of lenses according to an embodiment of the present disclosure.

FIG. 8 is a flowchart of a zoom method according to an embodiment of the present disclosure.

FIG. 9 is a top view of an exemplary variable curvature lens according to an embodiment of the present disclosure.

FIG. 10 is a first structural schematic diagram of a terminal according to an embodiment of the present disclosure.

FIG. 11 is a second structural schematic diagram of a terminal according to an embodiment of the present disclosure.

## DESCRIPTION OF EMBODIMENTS

In order to explain objects, technical solutions, and advantages of the embodiments of the present disclosure, specific technical solutions of the present disclosure will be described in further detail below in conjunction with the accompanying drawings in the embodiments of the present disclosure. The following embodiments are used to illustrate the present disclosure, rather than to limit the scope of the present disclosure.

Unless otherwise defined, all technical and scientific terms used in the present disclosure have the same meaning known for those skilled in the art of the present disclosure. The terms used in the present disclosure are only for the purpose of describing the embodiments of the present disclosure, and are not intended to limit the present disclosure.

The expression "some embodiments" as mentioned as below means a subset of all possible embodiments. However, it should be understood that "some embodiments" may be the same subset or different subsets of all possible embodiments, and can be combined with each other without conflict.

The embodiments of the present disclosure provide a zoom lens. By inserting variable curvature lenses in the zoom lens, a focal length of the lenses can be changed, and thus a focal length of the zoom lens can be changed, thereby breaking through the limitation in terms of a zoom manner of the zoom lens.

The technical solutions in the embodiments of the present disclosure will be clearly described in detail below in conjunction with the drawings in the embodiments of the present disclosure.

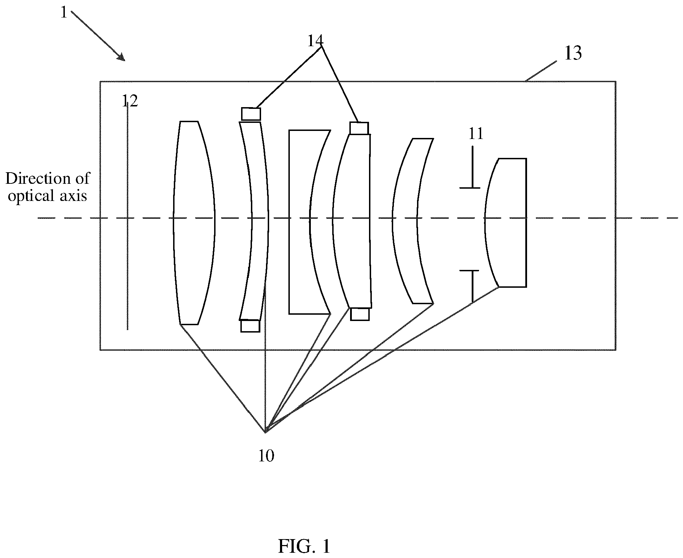

An embodiment of the present disclosure provides a zoom lens. FIG. 1 is a structural schematic diagram of a zoom lens 1 according to an embodiment of the present disclosure. As illustrated in FIG. 1, in this embodiment of the present disclosure, the zoom lens 1 may include: n lenses 10 arranged sequentially along a direction of an optical axis, where n is a positive integer greater than or equal to 2; a diaphragm 11 arranged parallel to the n lenses 10 along the direction of the optical axis; and an imaging surface 12 arranged at an end of the optical axis and parallel to the n lenses 10. The n lenses 10 include m variable curvature lenses and n-m aspheric lenses, driving devices 14 are provided at a top end and a bottom end of each of the m variable curvature lenses, and m is a positive integer greater than 1 and smaller than n.

It should be noted that, in this embodiment of the present disclosure, the n lenses are used as a group of lenses of the zoom lens for transmitting incident light coming from an object. The lenses refer to optical lenses.

In this embodiment of the present disclosure, the lens is an optical element made of a transparent material, and a surface of the lens is a part of a spherical surface. The lenses can be divided into different types such as a convex lens, a concave lens, a biconvex lens, a plano-convex lens, and a concave-convex lens, and the embodiments of the present disclosure are not limited to any of these examples.

In the present disclosure, the n lenses 10 include the m variable curvature lenses and the n-m aspheric lenses, the driving devices are provided at the top end and the bottom end of each of the m variable curvature lenses, and m is a positive integer greater than 1 and smaller than n.

The m variable curvature lenses may be made of liquid or silica gel, etc., and the embodiments of the present disclosure are not limited to any of these examples.

In this embodiment of the present disclosure, the zoom lens is provided with a diaphragm, which is a physical device for restricting a light beam in an optical system. The diaphragm described herein may be an edge of the lens, a frame, or a specially set perforated screen. Functions of the diaphragm can be divided into two aspects: limiting the light beam and limiting a field of view (an imaging range). An aperture diaphragm refers to the diaphragm that restricts light beams the most in the optical system, and a field diaphragm refers to the diaphragm that restricts the field of view (size) the most. In this embodiment of the present disclosure, adopted is the function of limiting the light beam, i.e., the aperture diaphragm.

The aperture diaphragm follows the general rule that, when viewing from the object, the diaphragm or an image of the diaphragm with the smallest field angle is determined to be the aperture diaphragm of the optical system. If the image of the diaphragm has the smallest field angle, this diaphragm is the aperture diaphragm. The aperture diaphragm is defined as a diaphragm limiting a diameter (solid angle or light-emitting section) of a beam of incident light from the object on the optical axis.

Further, in this embodiment of the present disclosure, the imaging surface is a light-receiving surface provided with a solid-state camera element such as a Charge-coupled Device (CCD) or a Complementary Metal Oxide Semiconductor (CMOS).

In this embodiment of the present disclosure, the n lenses, the diaphragm, and the imaging surface are all arranged in parallel along the direction of the optical axis. The imaging surface is arranged at the end of the optical axis.

In this embodiment of the present disclosure, the optical axis is a centerline of the light beam (light bundle), or a symmetry axis of the optical system. The light beam shall have no changes in optical characteristics when rotating around this axis. A straight line passing through centers of two spherical surfaces of the lens is referred to as a primary optical axis. Specifically, an optical axis of a lens having a single spherical surface is a straight line that passes through a center of a spherical surface and is perpendicular to a mirror surface. An optical axis of a lens or a coaxial optical system is a line connecting centers of spherical surfaces of lenses. It should be noted that any straight line passing through an optical center can be referred to as an optical axis of the lens, and is generally referred to as a secondary optical axis.

In this embodiment of the present disclosure, the direction of the optical axis may be a direction connecting spherical centers of the n lenses L1, ..., Ln.

In some embodiments of the present disclosure, as illustrated in FIG. 1, the zoom lens 1 further includes a connecting piece 13 configured to connect the n lenses 10, the diaphragm 11, and the imaging surface 12.

The connecting piece is a housing of the zoom lens or a packaging shell that wraps the n lenses, the diaphragm, and the imaging surface, etc., and the specific shape and material of the connecting piece are not limited in the embodiments of the present disclosure.

In some embodiments of the present disclosure, the diaphragm 11 is arranged at a position between any two of the n lenses along the direction of the optical axis; and the diaphragm 11 is configured to confine incident reflected light and emit the confined light.

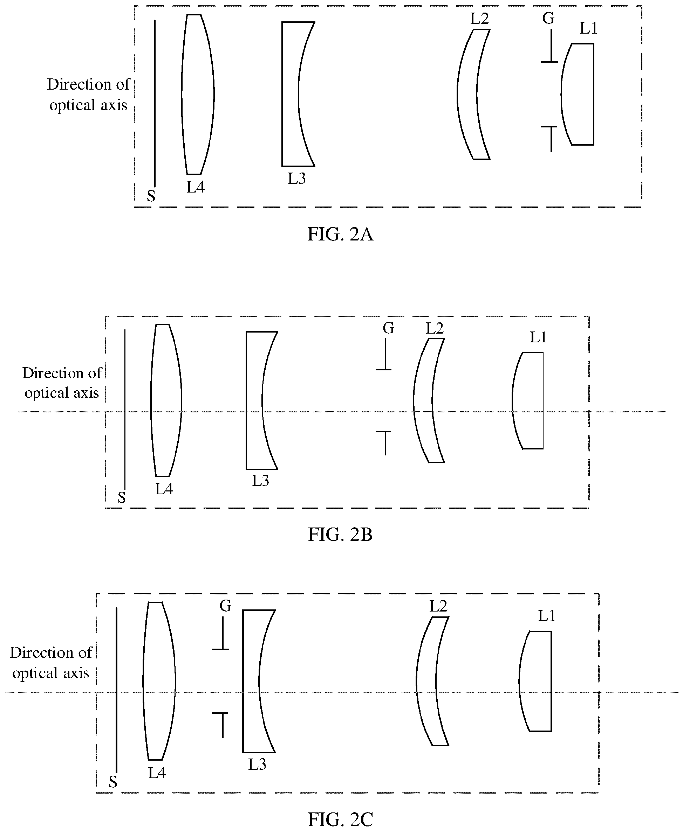

For example, as for the n lenses L1, ..., L4, the diaphragm G, and the imaging surface S, the diaphragm G may be arranged between L1 and L2 (as illustrated in FIG. 2A), or between L2 and L3 (as illustrated in FIG. 2B), or between L3 and L4 (as illustrated in FIG. 2C), and the like.

It should be noted that, in this embodiment of the present disclosure, the n lenses L1, ..., Ln, the diaphragm G, and the imaging surface S can be sequentially arranged along the direction of the optical axis. That is, along the direction of the optical axis, the L1, ..., Ln, the diaphragm G, and the imaging surface S are arranged in sequence. An arrangement order of the n lenses L1, ..., Ln and the diaphragm G may be different, which is not limited in the embodiments of the present disclosure.

In some embodiments of the present disclosure, the diaphragm G may be arranged between any two lenses of the lenses L1, ..., Ln, or in front of the lenses L1, ..., Ln, or behind the lenses L1, ..., Ln , and the diaphragm G is arranged in front of the S, which is not limited in the embodiments of the present disclosure.

It should be noted that "in front of' and "behind" mentioned in the embodiments of the present disclosure are based on that a position where the incident light starts to enter serves as a starting point, and the positions of the lenses L1, ..., Ln are arranged from front to back in sequence along the direction of the optical axis.

In this embodiment of the present disclosure, a terminal obtains an incident angle by changing power of the driving devices corresponding to each of the m variable curvature lenses and changing the radius of curvature of the m variable curvature lenses; and the incident light corresponding to the object, after being received, passes through the n lenses under a light-confining effect of the diaphragm and is reflected to the imaging surface at the incident angle for imaging.

The driving devices may be electrodes, and thus the terminal can obtain the incident angle by changing voltages of the electrodes corresponding to the m variable curvature lens and changing the radius of curvature of the m variable curvature lenses; and the incident light corresponding to the object, after being received, passes through the n lenses under a light-confining effect of the diaphragm and is reflected to the imaging surface at the incident angle for imaging..

It should be noted that, in this embodiment of the present disclosure, the radius of curvature of the m variable curvature lenses is changed by changing the power of the driving devices corresponding to the m variable curvature lenses, and focal lengths of the m variable curvature lenses are changed, such that the focal length of the zoom lens can be changed. In this case, the incident angle can be determined based on the focal length of the zoom lens, the incident light passes through the n lenses and is reflected to the imaging surface at the incident angle for imaging, thereby obtaining an image taken for the object.

In some embodiments of the present disclosure, the m variable curvature lenses and the n-m aspheric lenses are alternately arranged along the direction of the optical axis.

In some embodiments of the present disclosure, the m variable curvature lenses are consecutively disposed between any two of the n-m aspheric lenses along the direction of the optical axis.

It should be noted that, in the embodiments of the present disclosure, the m variable curvature lenses and the n-m aspheric lenses 101 can be arranged in various manners. The m variable curvature lenses and the n-m aspheric lenses may be alternately arranged along the direction of the optical axis; the m variable curvature lenses may also be arbitrarily inserted between the n-m aspheric lenses; the m variable curvature lenses may be consecutively disposed between any two of the n-m aspheric lenses along the direction of the optical axis; the n-m aspheric lenses may be consecutively disposed between any m variable curvatures along the direction of the optical axis; the m variable curvature lenses may be disposed in front of the n-m aspheric lenses along the direction of the optical axis; or, the m variable curvature lenses may be arranged behind the n-m aspheric lenses along the direction of the optical axis, etc. The embodiments of the present disclosure do not limit arrangement manners of the m variable curvature lenses and the n-m aspheric lenses along the direction of the optical axis.

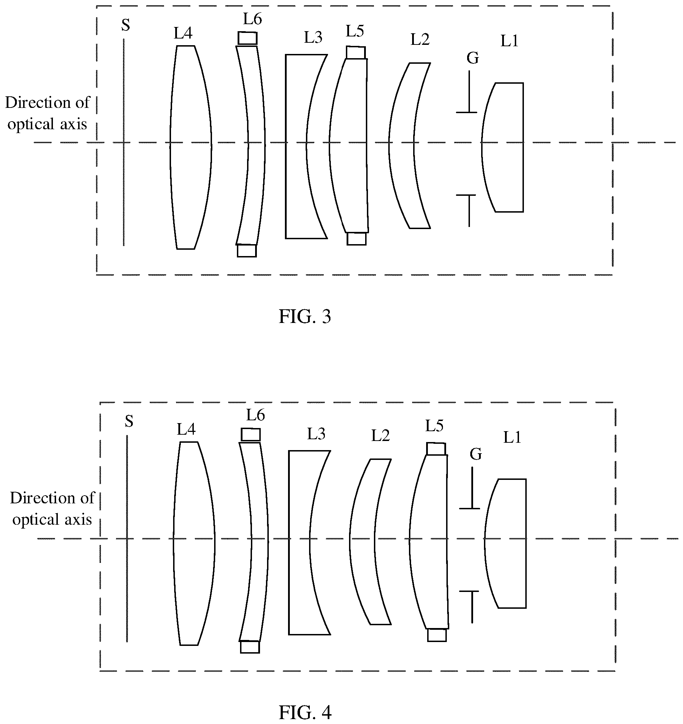

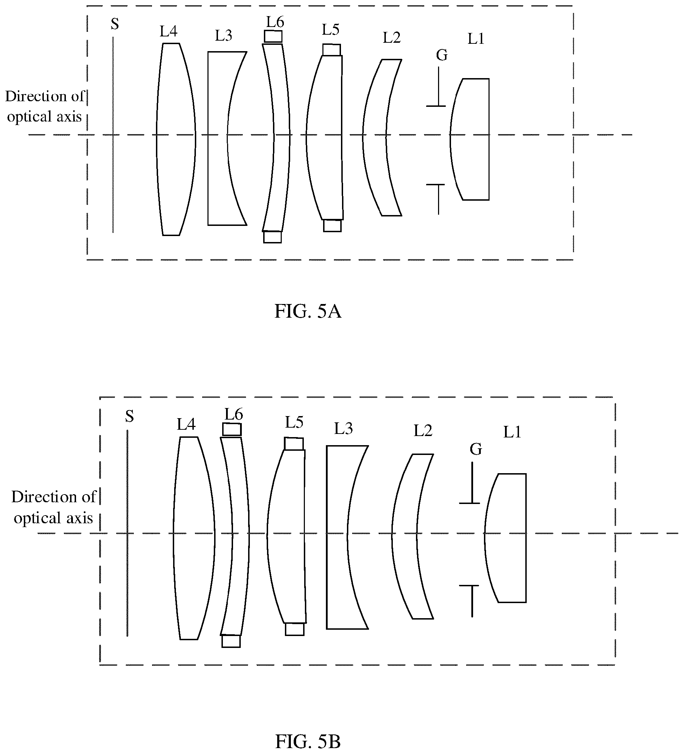

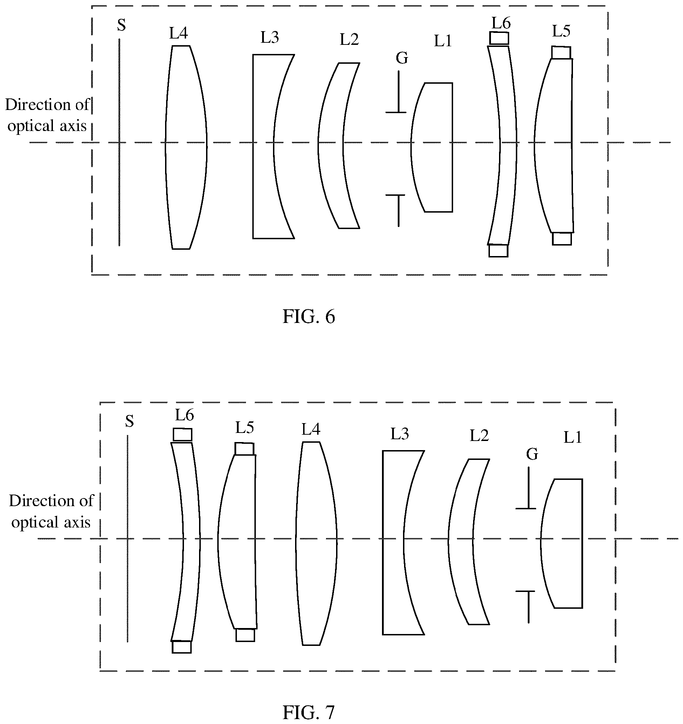

As examples, assuming that n is 6, and m is 2, as illustrated in FIG. 3, two variable curvature lenses L5 and L6 and four aspheric lenses L1, ..., L4 are alternately arranged along the direction of the optical axis; as illustrated in FIG. 4, the two variable curvature lenses L5 and L6 are inserted between the four aspheric lenses, i.e., the variable curvature lenses L5 and L6 are inserted between L1 and L2 and between L3 and L4, respectively; as illustrated in FIG. 5A and FIG. 5B, the two variable curvature lenses L5 and L6 are consecutively disposed between any two of the four aspheric lenses L1, ..., L4 along the direction of the optical axis, for example, arranged between L2 and L3 (FIG. 5A), or disposed between L3 and L4 (FIG. 5B), etc.; as illustrated in FIG. 6, the two variable curvature lenses L5 and L6 are disposed in front of the four aspheric lenses L1, ..., L4 along the direction of the optical axis; or as illustrated in FIG. 7, the two variable curvature lenses L5 and L6 are disposed behind the four aspheric lenses L1, ..., L4 along the direction of the optical axis.

It can be understood that the variable curvature lenses are provided in the zoom lens, and each variable curvature lens is provided with the driving devices to change the curvature of the variable curvature lens by changing the power of the driving devices. In this way, the focal length of the variable curvature lens can be changed accordingly, thereby affecting the focal length of the whole zoom lens and realizing the zoom function. Since the zoom lens can exert the zoom function only through the provided driving devices, the arrangement positions of the n lenses along the direction of the optical axis can remain unchanged, and a length occupied by the arrangement positions of the lenses is smaller than a distance required for moving the lenses. Therefore, such a zoom lens has a small size conducive to miniaturization of a camera module, a short optical path, and good imaging performance, and it avoids the errors such as eccentricity and tilt that are caused by lens movement, thereby improving the imaging quality of the lens.

In this embodiment of the present disclosure, the zoom lens may be provided in the terminal. The terminal may further include a body, in which a controller is provided, and a housing surrounding the body. Specifically, the zoom lens may be arranged on a back of the body and protrude from the housing, and the zoom lens may be electrically connected to the controller.

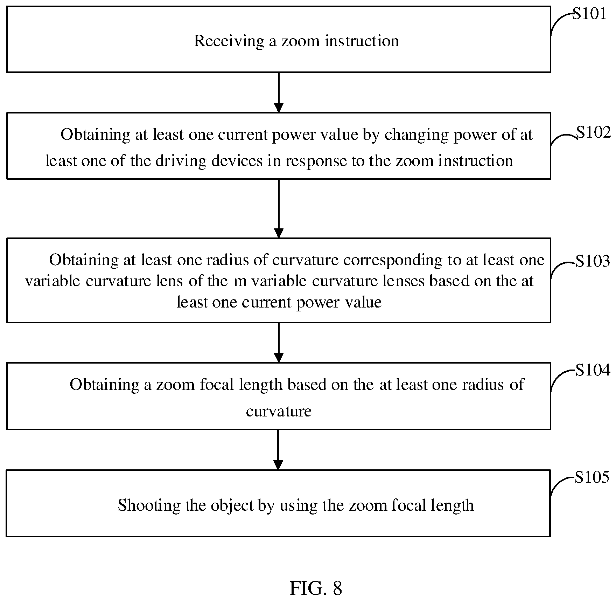

An embodiment of the present disclosure provides a zoom method, which is proposed based on the structure of the terminal as described above. As illustrated in FIG. 8, the zoom method is applied in the terminal provided with the above zoom lens, and the method may include the following steps.

In S101, a zoom instruction is received.

In this embodiment of the present disclosure, in a scenario where a user uses the terminal for shooting, if the focus length needs to be adjusted, the user can trigger the zoom function in a shooting setting interface of the terminal, and the zoom instruction is generated by triggering the zoom function. That is, the terminal receives the zoom instruction.

The lens arranged in the terminal is the zoom lens, and the zoom instruction is used to adjust and change the focal length of the zoom lens.

In S102, in response to the zoom instruction, at least one current power value is obtained by changing power of at least one of the driving devices.

In S103, at least one radius of curvature corresponding to at least one variable curvature lens is obtained based on the at least one current power value.

In response to the zoom instruction, the terminal is instructed that the zoom lens needs to perform zooming. Since the zoom lens is electrically connected to the controller of the terminal, the zoom instruction allows the controller to control, via a bus system, the power at both ends of the driving device of at least one variable curvature lens in the zoom lens. The terminal obtains at least one current power value by changing the power of at least one driving devices corresponding to at least one variable curvature lens; and the terminal obtains the corresponding at least one radius of curvature based on the effect of each current power value exerted on the corresponding at least one variable curvature lens, and changes the focal length of the variable curvature lens based on a change in the radius of curvature.

It should be understood that, in this embodiment of the present disclosure, the controller of the terminal may control the power of some or all of the driving devices of the at least one variable curvature lens, which is not limited in the embodiment of the present disclosure.

The driving devices can be construed as a pair of driving devices arranged on the top and bottom of each variable curvature lens. The terminal changes power of one pair of driving devices corresponding to each variable curvature lens.

It should be understood that the greater the power is, the greater the change in the curvature of the corresponding variable curvature lens is, i.e., the greater the radius of curvature.

In some embodiments of the present disclosure, the driving device may be an electrode, or any other drive capable of deforming the variable curvature lens, which is not limited in the embodiments of the present disclosure. The terminal obtains at least one current power value by changing the power of at least one of the driving devices in response to the zoom instruction; and the terminal obtains at least one radius of curvature corresponding to the at least one variable curvature lens based on the at least one current power value.

The principle of changing the curvature by the voltage is that the variable curvature lens can be bent under a force generated from an interaction between electricity and a magnet.

Further, in the embodiments of the present disclosure, the radius of curvature of the variable curvature lens changed by the terminal refers to the radii of curvature of the front and rear surfaces of the variable curvature lens along the direction of the optical axis.

It can be understood that, although a plurality of variable curvature lenses may be provided in the zoom lens in the terminal, the focal length of the lenses, i.e., the focal length of the whole zoom lens, can be changed only by changing the radius of curvature of at least one variable curvature lens. Therefore, the embodiments of the present disclosure do not limit the number of variable curvature lenses whose radius of curvature can be changed.

In S104, a zoom focal length is obtained based on the at least one radius of curvature.

After the terminal obtains the at least one radius of curvature corresponding to the at least one variable curvature lens, the focal length corresponding to each of the at least one variable curvature lens can be changed based on the at least one curvature radius. The focal length of the zoom lens is affected by the focal length of a lens assembly of n lenses. Thus, if a lens focal length of at least one variable curvature lens in the lens assembly of n lenses is changed, the focal length of the entire zoom lens can be changed, thereby obtaining the zoom focal length of the zoom lens.

In some embodiments of the present disclosure, the terminal obtains at least one lens thickness and at least one refractive index corresponding to the at least one variable curvature lens; the terminal calculates at least one lens focal length corresponding to the at least one variable curvature lens based on the at least one radius of curvature, the at least one lens thickness, and the at least one refractive index; and the terminal obtains the zoom focal length based on a combination of changes of the at least one lens focal length. The refractive index is a refractive index of a material of the lens.

It should be noted that, the lens thickness, the refractive index, and other parameters of one variable curvature lens may be stored in a database in advance and can be retrieved from the database and used for exerting the zoom function. In this way, the terminal can obtain the lens focal length of each variable curvature lens based on the lens thickness, the changed radius of curvature, and the refractive index corresponding to the curvature lens, so as to obtain the at least one lens focal length corresponding to the at least one variable curvature lens.

In the embodiments of the present disclosure, the scenes or objects at different distances can be clearly imaged by adding one or more optical lenses with variable curvature and changing the curvature of the variable curvature lens to change the focal length of the whole lens assembly in combination with a motor focus. For an optical lens having a single spherical surface (variable curvature lens lens), its focal length is determined by the refractive index of a material from which the optical lens is made, the thickness, and the curvature. The curvature of the lens surface can be changed by electrode driving, etc., to change the focal length of the lens, thereby exerting the zoom function of the entire lens assembly. In this way, requirements for clear imaging of the scenes or objects at different distances can be satisfied, and no motor is required during zooming, thereby saving the system costs. In addition, no lens is required to be moved, which avoids image quality degradation caused by errors generated during a lens movement, etc.

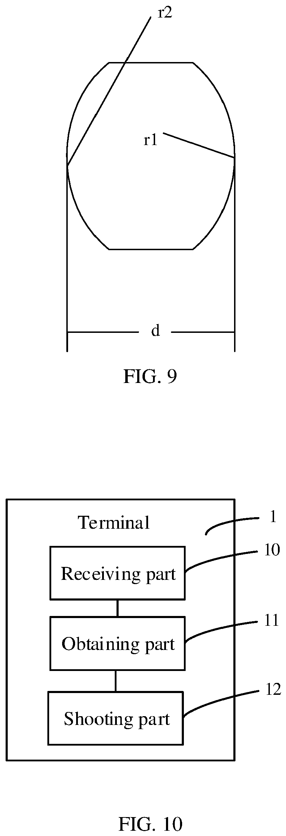

For example, as illustrated in FIG. 9, the terminal may obtain the lens focal length based on formula (1):

$$f=(nr1r2)/\{(n-1)[n(r2-r1)+(n-1)d]\} \qquad (1).$$

In the formula (1), r1 and r2 respectively represent radii of curvature of front and back surfaces of a variable curvature lens along the direction of the optical axis, d represents the lens thickness, n represents the refractive index, and f represents the lens focal length. In view of the formula (1), the focal length f varies with the change of the radii of curvature of the lens.

Further, in the embodiments of the present disclosure, a manner for the terminal to calculate the zoom focal length based on the combination of changes of the at least one lens focal length is a calculation manner determined based on a lens type.

Illustratively, two convex lenses are taken as an example for description. Assuming that a convex lens 1 has a focal length f1, a convex lens 2 has a focal length f2, the convex lens 1 and the convex lens 2 are very close to each other, a distance between centers of the two convex lenses is d, and a lens center of the convex lens 1 is determined as a center of the lens assembly. A beam of parallel light enters the convex lens 1, and a bright spot is formed at a focal point. When the convex lens 2 is in place, the bright spot is used as an object of the convex lens 2, and thus a distance between the object and the convex lens 2 is u2 = -(fl-d). Since the left side of the convex lens 2 is positive, the right side is negative, a position v2 of an image on the convex lens 2 can be calculated by using an imaging law formula (2) of convex lens. With this image distance, the focal length of the assembly of convex lenses can be calculated. The formula (2) is as follows:

$$1/u2+1/v2=1/f2 \qquad (2).$$

In the formula (2), v2 is calculated based on the formula (3):

$$1/[-(f1-d)]+1/v2=1/f2 \qquad (3).$$

Therefore, v2 is expressed by formula (4):

$$v2=1/[1/f2+1/(f1-d)] \qquad (4).$$

Based v2, the distance between an image on the convex lens 2 and the convex lens 1 is calculated as: v2+d. Such a distance is the focal length of the assembly of convex lenses. That is, the focal length of the assembly of convex lenses is calculated based on formula (5):

$$f=1/[1/f2+1/(f1-d)]+d \qquad (5).$$

It can be understood that a change of a lens focal length of one lens in the zoom lens can affect the zoom focal length of the entire zoom lens.

In S 105, the object is shot by using the zoom focal length.

After the terminal obtains the zoom focal length of the zoom lens, the object can be shot based on an imaging principle, and thus a captured image can be obtained.

For example, the Gaussian imaging formula (6), the most basic in optics field, is as follows:

$$1/u + 1/v = 1/F \qquad (6).$$

A reciprocal of a focal length F is equal to a sum of a reciprocal of an object distance u and a reciprocal of an image distance v, and imaging is performed based on this.

It can be understood that the variable curvature lenses are provided in the zoom lens, and each variable curvature lens is provided with the driving devices. In this way, the curvature of the variable curvature lens can be changed by changing the power of the driving devices, and the focal length of the variable curvature lens can be changed accordingly, thereby affecting the focal length of the whole zoom lens and exerting the zoom function. Since the zoom lens can exert the zoom function only through the provided driving devices, the arrangement positions of the n lenses along the direction of the optical axis can remain unchanged, and a length occupied by the arrangement positions of the lenses is smaller than a distance required for moving the lenses. Therefore, such a zoom lens has a small size, a short optical path, and good imaging performance, and it avoids the errors such as eccentricity and tilt that are caused by lens movement, thereby improving the imaging quality of the lens.

Based on the same inventive concept of the above embodiments, an embodiment of the present disclosure provides a terminal 1, as illustrated in FIG. 10, and the terminal 1 includes: a receiving part 10 configured to receive a zoom instruction; an obtaining part 11 configured to obtain at least one current power value by changing power of at least one driving device in response to the zoom instruction, obtain at least one radius of curvature corresponding to at least one variable curvature lens based on the at least one current power value, and obtain a zoom focal length based on the at least one radius of curvature; and a shooting part 12 configured to shoot an object by using the zoom focal length.

In some embodiments of the present disclosure, the obtaining part 11 is further configured to obtain at least one lens thickness and at least one refractive index corresponding to the at least one variable curvature lens, calculate at least one lens focal length corresponding to the at least one variable curvature lens based on the at least one radius of curvature, the at least one lens thickness, and the at least one refractive index, and obtain the zoom focal length based on a change of a combination of the at least one lens focal length.

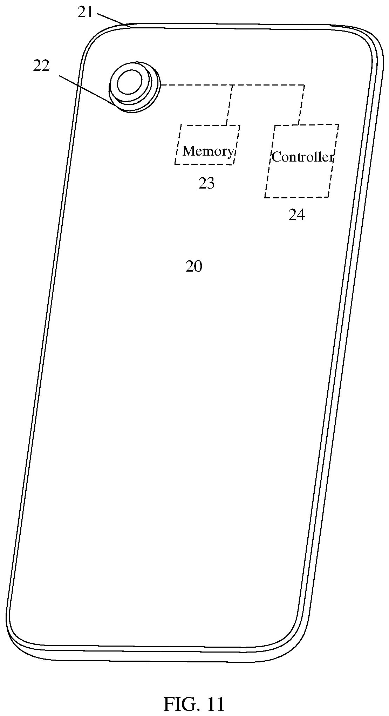

As illustrated in FIG. 11, an embodiment of the present disclosure further provides a terminal. The terminal includes: a body 20; a housing 21 surrounding the body 20; a zoom lens 22 arranged on a back of the body and protruding from the housing 21, the zoom lens 22 being electrically connected to the controller 24; a memory 23 provided in the body and configured to store executable instructions; and a controller 24 provided in the body and configured to implement, when executing the executable instructions stored in the memory 23, the zoom method according to the embodiments of the present disclosure.

In some embodiments of the present disclosure, the controller 24 is further configured to change the power of the driving device in the zoom lens in response to the zoom instruction.

An embodiment of the present disclosure provides a computer-readable storage medium. The computer-readable storage medium stores executable instructions. The executable instructions, when executed by a controller, implement the zoom method according to the embodiments of the present disclosure.

The terminal may further include a bus system. The respective components in the terminal are coupled with each other through the bus system. It can be understood that the bus system is used to realize connection and communication of these components. In addition to a data bus, the bus system may further include a power bus, a control bus, and a status signal bus.

The controller can be realized by software, hardware, firmware, or a combination thereof, and it may adopt a circuit, one or more application specific integrated circuits (ASIC), one or more general integrated circuits, one or more microprocessors, one or more programmable logic devices, or a combination of the above circuits or devices, or other suitable circuits or devices. Therefore, the controller 24 can execute corresponding steps of the zoom method in the embodiments.

Respective functional units in the embodiments of the present disclosure may be integrated in one processing unit, or the respective units may be separate physical units, or two or more units thereof may be integrated in one unit. The above integrated units can be implemented in a form of hardware, or in a form of a functional software unit.

If the integrated units are realized in a form of software function module and are sold or used as a separate product, they can be stored in a computer-readable storage medium. In this regard, essential parts of the technical solutions, parts making a contribution to the related art, or parts of the technical solutions of the present disclosure can be embodied in a form of a software product stored in a storage medium and including several instructions used for causing a computer device (for example, a personal computer, a server, or a network device) or a processor to execute all or part of steps in the methods described in respective embodiments of the present disclosure. The above storage medium may be any medium capable of storing program codes, including a ferromagnetic random access memory (FRAM), a read only memory (ROM), a programmable read-only memory (PROM), an erasable programmable read-only memory (EPROM), an electrically erasable programmable read-only memory (EEPROM), a flash memory, a magnetic surface memory, an optical disk, a compact disc read-only memory (CD-ROM), which is not limited in the embodiments of the present disclosure.

An embodiment of the present disclosure provides a computer-readable storage medium. The computer-readable storage medium stores executable instructions. The executable instructions, when executed by a processor, implement the zoom method according to the embodiments of the present disclosure.

The above are only preferred embodiments of the present disclosure, and are not intended to limit the protection scope of the present disclosure.

Industrial Applicability

Embodiments of the present disclosure provide a control method of a network connection, a terminal, and a storage medium. The variable curvature lenses are provided in the zoom lens, and each variable curvature lens is provided with driving devices. In this way, the curvature of the variable curvature lens can be changed by changing the power of the driving devices, and accordingly, the focal length of the variable curvature lens can be changed, thereby affecting a focal length of the whole zoom lens and exerting the zoom function. Since the zoom lens can exert the zoom function only through the provided driving devices, the arrangement positions of the n lenses along the direction of the optical axis can remain unchanged, and a length occupied by the arrangement positions of the lenses is smaller than a distance required for moving the lenses. Therefore, such a zoom lens has a small size, a short optical path, and good imaging performance, and it avoids the errors such as eccentricity and tilt that are caused by lens movement, thereby improving the imaging quality of the lens.

**Claims**

1.  A zoom lens, comprising:

    n lenses arranged sequentially along a direction of an optical axis, n being a positive integer greater than or equal to 2;
    a diaphragm arranged parallel to the n lenses along the direction of the optical axis; and

an imaging surface arranged at an end of the optical axis and parallel to the n lenses,
wherein the n lenses comprise m variable curvature lenses and n-m aspheric lenses, and driving devices are provided at a top end and a bottom end of each of the m variable curvature lenses, m being a positive integer greater than 1 and smaller than n; and
wherein a radius of curvature of at least one variable curvature lens of the m variable curvature lenses is changed by changing power of the driving devices corresponding to the at least one variable curvature lens to obtain an incident angle; and when incident light corresponding to an object is received, the incident light is capable of passing through the n lenses under a light-confining effect of the diaphragm and being reflected to the imaging surface at the incident angle for imaging.

2. The zoom lens according to claim 1, wherein the diaphragm is arranged at a position between any two of the n lenses along the direction of the optical axis; and
the diaphragm is configured to confine incident reflected light and emit the confined light.

3. The zoom lens according to claim 1 or 2, wherein the m variable curvature lenses and the n-m aspheric lenses are alternately arranged along the direction of the optical axis.

4. The zoom lens according to any one of claims 1 to 3, wherein the m variable curvature lenses are consecutively arranged between any two of the n-m aspheric lenses along the direction of the optical axis.

5. The zoom lens according to any one of claims 1 to 4, wherein the imaging surface is a light-receiving surface provided with a Charge-coupled Device (CCD) or a Complementary Metal Oxide Semiconductor (CMOS).

6. The zoom lens according to any one of claims 1 to 5, wherein each of the driving devices is an electrode, and the power of each of the driving devices is a voltage of the electrode.

7. The zoom lens according to any one of claims 1 to 6, further comprising a connecting piece configured to connect the n lenses, the diaphragm, and the imaging surface.

8. A zoom method, applied in a terminal provided with the zoom lens according to claims 1 to 7, the zoom method comprising:

receiving a zoom instruction;
obtaining at least one current power value by changing power of at least one of the driving devices in response to the zoom instruction;
obtaining at least one radius of curvature corresponding to at least one variable curvature lens of the m variable curvature lenses based on the at least one current power value;
obtaining a zoom focal length based on the at least one radius of curvature; and
shooting the object by using the zoom focal length.

9. The method according to claim 8, wherein said obtaining the zoom focal length based on the at least one radius of curvature comprises:

obtaining at least one lens thickness and at least one refractive index corresponding to the at least one variable curvature lens;
calculating at least one lens focal length corresponding to the at least one variable curvature lens based on the at least one radius of curvature, the at least one lens thickness, and the at least one refractive index; and
obtaining the zoom focal length based on a combination of changes of the at least one lens focal length.

10. A terminal, comprising:

a receiving part configured to receive a zoom instruction;
an obtaining part configured to obtain at least one current power value by changing power of at least one driving device in response to the zoom instruction, obtain at least one radius of curvature corresponding to at least one variable curvature lens based on the at least one current power value, and obtain a zoom focal length based on the at least one radius of curvature; and
a shooting part configured to shoot an object by using the zoom focal length.

**11.** The terminal according to claim 10, wherein the obtaining part is further configured to obtain at least one lens thickness and at least one refractive index corresponding to the at least one variable curvature lens, calculate at least one lens focal length corresponding to the at least one variable curvature lens based on the at least one radius of curvature, the at least one lens thickness, and the at least one refractive index, and obtain the zoom focal length based on a combination of changes of the at least one lens focal length.

**12.** A terminal, comprising:

a body;
a housing surrounding the body;
a zoom lens arranged on a back of the body and protruding from the housing, wherein the zoom lens is electrically connected to the controller;
a memory provided in the body and configured to store executable instructions; and
a controller provided in the body and configured to implement, when executing the executable instructions stored in the memory, the method according to claim 8 or 9.

**13.** The terminal according to claim 12, wherein the controller is further configured to change the power of at least one of the driving devices in the zoom lens in response to the zoom instruction.

**14.** A computer-readable storage medium, having executable instructions stored thereon, wherein the executable instructions, when executed by a controller, implement the method according to claim 8 or 9.

FIG. 1

Direction of
optical axis

S    L4    L3    L2    G    L1

FIG. 2A

Direction of
optical axis

S    L4    L3    G    L2    L1

FIG. 2B

Direction of
optical axis

S    L4    G    L3    L2    L1

FIG. 2C

FIG. 3

FIG. 4

FIG. 5A

FIG. 5B

S    L4        L3        L2      G      L1      L6      L5

Direction of
optical axis

FIG. 6

S    L6      L5      L4        L3      L2      G      L1

Direction of
optical axis

FIG. 7

Receiving a zoom instruction — S101

Obtaining at least one current power value by changing power of at least one of the driving devices in response to the zoom instruction — S102

Obtaining at least one radius of curvature corresponding to at least one variable curvature lens of the m variable curvature lenses based on the at least one current power value — S103

Obtaining a zoom focal length based on the at least one radius of curvature — S104

Shooting the object by using the zoom focal length — S105

FIG. 8

FIG. 9

FIG. 10

21

22

Memory

23

Controller

24

20

FIG. 11

## INTERNATIONAL SEARCH REPORT

| International application No. |
|---|
| **PCT/CN2020/096845** |

**A.    CLASSIFICATION OF SUBJECT MATTER**

G02B 15/04(2006.01)i;  G02B 13/18(2006.01)i;  G02B 3/14(2006.01)i

According to International Patent Classification (IPC) or to both national classification and IPC

**B.    FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, CNKI, WPI, EPODOC: 变焦透镜, 非球面, 数据库, 电压, 曲率, 折射率, 厚度, 驱动, 控制, 信号, variable, focal, voltage, aspher+, curvature, thickness, refract+, lens, image, detect+, driv+, control+

**C.    DOCUMENTS CONSIDERED TO BE RELEVANT**

| Category* | Citation of document, with indication, where appropriate, of the relevant passages | Relevant to claim No. |
|---|---|---|
| PX | CN 110221416 A (GUANGDONG OPPO MOBILE COMMUNICATIONS CORP., LTD.) 10 September 2019 (2019-09-10)<br>claims 1-14 | 1-14 |
| X | CN 101520544 A (FOSHAN PANPOWER TECHNOLOGY CO., LTD.) 02 September 2009 (2009-09-02)<br>description pages 3-11, figure 1 | 1-7 |
| X | CN 101520544 A (FOSHAN PANPOWER TECHNOLOGY CO., LTD.) 02 September 2009 (2009-09-02)<br>description pages 3-11, figure 1 | 8-9, 12-14 |
| X | CN 101042462 A (MITUTOYO CORPORATION) 26 September 2007 (2007-09-26)<br>description pages 3-10, figures 1-5 | 10-11 |
| Y | CN 101042462 A (MITUTOYO CORPORATION) 26 September 2007 (2007-09-26)<br>description pages 3-10, figures 1-5 | 8-9, 12-14 |
| X | CN 1914522 A (KONINKL PHILIPS ELECTRONICS NV) 14 February 2007 (2007-02-14)<br>description pages 3-11, figure 1 | 1-7 |

☑ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **29 August 2020** | **22 September 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/096845**

| C. | DOCUMENTS CONSIDERED TO BE RELEVANT | |
|---|---|---|
| Category* | Citation of document, with indication, where appropriate, of the relevant passages | Relevant to claim No. |
| X | CN 104939793 A (UNIVERSITY OF SHANGHAI FOR SCIENCE AND TECHNOLOGY) 30 September 2015 (2015-09-30) description paragraphs [0006]-[0031], figure 2 | 1-7 |
| A | JP 2006145807 A (NIKON CORP.) 08 June 2006 (2006-06-08) entire document | 1-14 |
| A | JP 2015084037 A (NIKON CORP.) 30 April 2015 (2015-04-30) entire document | 1-14 |

Form PCT/ISA/210 (second sheet) (January 2015)

## INTERNATIONAL SEARCH REPORT
### Information on patent family members

International application No.

**PCT/CN2020/096845**

| Patent document cited in search report | | | Publication date (day/month/year) | Patent family member(s) | | | Publication date (day/month/year) |
|---|---|---|---|---|---|---|---|
| CN | 110221416 | A | 10 September 2019 | None | | | |
| CN | 101520544 | A | 02 September 2009 | None | | | |
| CN | 101042462 | A | 26 September 2007 | JP | 2007256956 | A | 04 October 2007 |
| | | | | US | 2007221821 | A1 | 27 September 2007 |
| | | | | US | 7436587 | B2 | 14 October 2008 |
| | | | | EP | 1837689 | A1 | 26 September 2007 |
| CN | 1914522 | A | 14 February 2007 | CN | 100474005 | C | 01 April 2009 |
| | | | | EP | 1714171 | A1 | 25 October 2006 |
| | | | | IN | 200603139 | P4 | 08 June 2007 |
| | | | | US | 8003845 | B2 | 23 August 2011 |
| | | | | WO | 2005073762 | A1 | 11 August 2005 |
| | | | | KR | 20060129323 | A | 15 December 2006 |
| | | | | JP | 2007519973 | A | 19 July 2007 |
| | | | | US | 2008231966 | A1 | 25 September 2008 |
| | | | | JP | 2012196672 | A | 18 October 2012 |
| | | | | US | 2008264311 | A1 | 30 October 2008 |
| CN | 104939793 | A | 30 September 2015 | None | | | |
| JP | 2006145807 | A | 08 June 2006 | None | | | |
| JP | 2015084037 | A | 30 April 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910574067